# DEMANDE DE BREVET EUROPEEN

(11) **EP 0 836 059 A1**
(43) Date de publication de la demande: **15.04.1998**
(21) Numéro de dépôt: 97402309.5
(22) Date de dépôt: 02.10.1997
(51) Int. Cl.: F25B 15/06, F25B 29/00

(54) **Frigopompe**

(30) Priorité: 10.10.1996 FR 9612388
(71) Demandeur: GAZ DE FRANCE, 75017 Paris (FR)
(72) Inventeur: Le Goff, Pierre, 54000 Nancy (FR); Dornier, Jérôme, 54220 Malzeville (FR); Soide, Isabelle, 95120 Ermont (FR)
(74) Mandataire: Thévenet, Jean-Bruno

(57) **Abrégé**

La frigopompe de refroidissement d'un fluide frigoporteur alimentant un système de climatisation comporte d'une part une chaudière-séparateur (100) destinée à séparer par chauffage et évaporation les deux constituants, dont l'un est volatile, d'un fluide frigorigène et d'autre part un mélangeur (132) destiné à reformer par évaporation et absorption ce fluide frigorigène. La chaudière-séparateur comporte une chambre de combustion (102) et plusieurs enceintes (104, 106, 108, 110) de désorption-absorption s'étendant concentriquement depuis cette chambre de combustion, le conduit de sortie (110b, 108b, 106b) du désorbeur d'une enceinte étant relié au conduit d'entrée (108a, 106a, 104a) du désorbeur de l'enceinte immédiatement précédente au travers d'un premier échangeur (118, 120, 122), le conduit de sortie (104b) du désorbeur de la première enceinte et le conduit d'entrée (110a) du désorbeur de la dernière enceinte étant reliés au mélangeur (132), et le conduit de sortie (104c, 106c, 108c) de l'absorbeur d'une enceinte étant lui-même relié au conduit d'entrée (106d, 108d, 110d) de l'absorbeur de l'enceinte immédiatement suivante au travers d'un second échangeur (124, 126, 128), le conduit d'entrée (104d) de l'absorbeur de la première enceinte et le conduit de sortie (110c) de l'absorbeur de la dernière enceinte étant reliés au mélangeur (132).

## Description

### Domaine de la technique

La présente invention se rapporte aux dispositifs appelés frigopompes destinés à abaisser la température d'un fluide frigoporteur traversant un système de climatisation à usage domestique (maison individuelle ou immeuble collectif) ou industriel (bureau ou usine).

### Art antérieur

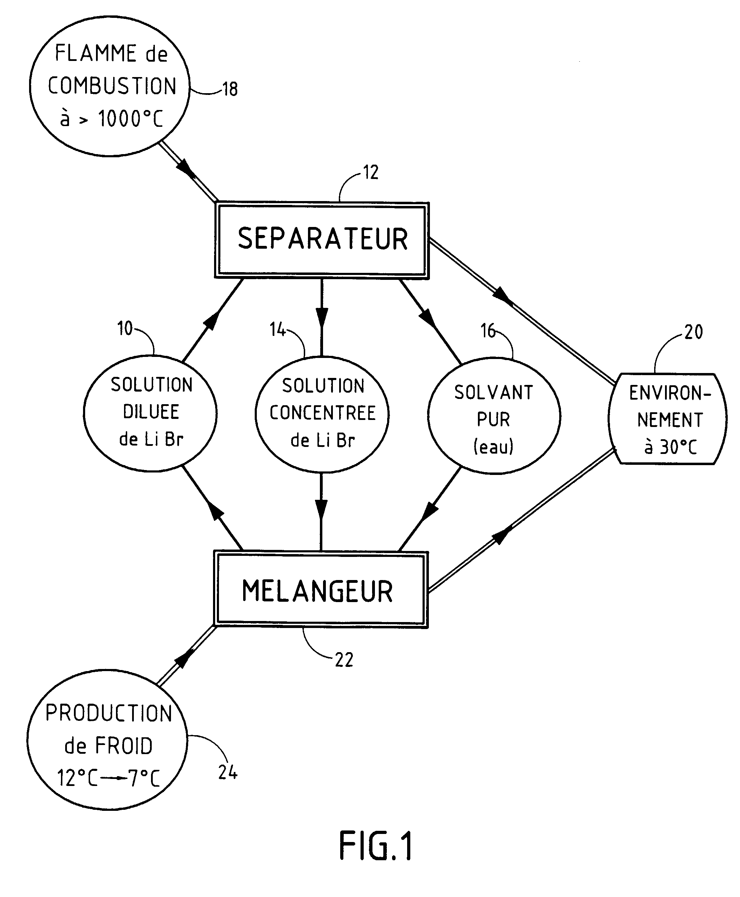

Le schéma de principe d'une frigopompe utilisant comme fluide frigorigène un mélange eau-bromure de lithium est donné à la figure 1.

Le fonctionnement d'une telle pompe repose sur deux opérations distinctes. La première consiste à séparer (par un séparateur 12) les deux constituants du mélange frigorigène 10 constitué par une solution diluée de bromure de lithium pour obtenir d'une part une solution concentrée (le concentrat 14) de bromure de lithium et d'autre part l'eau (un solvant pur 16), cette séparation étant réalisée grâce à la dégradation d'un flux de chaleur entre une source à haute température 18 (par exemple une flamme de combustion à plus de 1000°C) et un puits de chaleur 20 (constitué par exemple par un environnement ambiant à 30°C). La seconde opération consiste ensuite à remélanger ces constituants (dans un mélangeur 22) pour reformer le mélange frigorigène initial 10 (le diluat), à partir de la ré-évaporation par pompage de chaleur d'un fluide frigoporteur (constitué par exemple d'eau glycolée ou tout autre liquide à bas point de congélation) du système de climatisation 24 et de la condensation puis du mélange de la vapeur ainsi obtenue à la solution concentrée 14, ce mélange libèrant une chaleur de condensation-absorption à un niveau thermique supérieur à celui de l'environnement ambiant 20.

Les frigopompes à eau-bromure de lithium commercialisées actuellement comportent presque toutes, au niveau du séparateur, deux étages de désorption-condensation (d'où leur appellation de frigopompes à deux effets) effectuant chacun une opération de vaporisation-condensation thermique et admettant une température maximale d'environ 150°C. Cette valeur maximale s'explique par le fait, qu'au delà de cette température, tous les métaux se corrodent en présence d'une solution aqueuse de bromure de lithium.

### Définition et objet de l'invention

La présente invention se propose de réaliser une frigopompe qui autorise un fonctionnement pour des températures supérieures à celles actuellement admises et pouvant aller notamment jusqu'à 250°C. Un but de l'invention est aussi d'améliorer les bilans thermiques des frigopompes actuelles ainsi que leurs rendements énergétiques. Un autre but est d'obtenir un coefficient de performance (rapport de la puissance du système de climatisation à la puissance chauffante de la combustion) le plus élevé possible et de préférence supérieur à deux (valeur qui doit être comparée aux valeurs actuelles qui sont de l'ordre de l'unité).

Ces buts sont atteints par une frigopompe de refroidissement d'un fluide frigoporteur alimentant un système de climatisation d'un bâtiment et comportant d'une part une chaudière-séparateur destinée à séparer par chauffage et évaporation les deux constituants, dont l'un est volatile, d'un fluide frigorigène et d'autre part un mélangeur destiné à reformer par évaporation et absorption ce fluide frigorigène, caractérisée en ce que la chaudière-séparateur comporte une chambre de combustion et plusieurs enceintes de désorption-absorption s'étendant concentriquement depuis cette chambre de combustion, le conduit de sortie de la partie de désorption ou désorbeur d'une enceinte étant relié au conduit d'entrée du désorbeur de l'enceinte immédiatement précédente au travers d'un premier échangeur, le conduit de sortie du désorbeur de la première enceinte et le conduit d'entrée du désorbeur de la dernière enceinte étant reliés au mélangeur, et le conduit de sortie de la partie d'absorption ou absorbeur d'une enceinte étant lui même relié au conduit d'entrée de l'absorbeur de l'enceinte immédiatement suivante au travers d'un second échangeur, le conduit d'entrée de l'absorbeur de la première enceinte et le conduit de sortie de l'absorbeur de la dernière enceinte étant reliés au mélangeur.

Le conduit d'entrée du désorbeur de la dernière enceinte est relié au mélangeur au travers d'un premier échangeur et le conduit de sortie du désorbeur de la première enceinte est relié au mélangeur au travers de l'ensemble des premiers échangeurs. De même, le conduit de sortie de l'absorbeur de la dernière enceinte est relié au mélangeur au travers d'un second échangeur et le conduit d'entrée de l'absorbeur de la première enceinte est relié au mélangeur au travers de l'ensemble des seconds échangeurs.

Le fluide frigorigène est avantageusement un mélange d'eau et de bromure de lithium et le fluide frigoporteur est un liquide à bas seuil de congélation tel que de l'eau glycolée.

Selon les températures et pressions désirées, la chaudière-séparateur peut comporter deux, trois ou quatre enceintes de désorption-absorption.

Dans un mode de réalisation préférentiel, les première et deuxième enceintes les plus proches de la chambre de combustion comportent des parois en graphite imprégné de résine. La paroi en graphite de la première enceinte en contact direct avec la flamme de combustion peut en outre être recouverte d'une mince feuille d'un métal réfractaire.

Avantageusement, l'enceinte la plus externe de la chaudière-séparateur comporte un premier circuit de circulation relié à un dispositif de refroidissement d'un fluide caloporteur chaud, tel un aéro-réfrigérant, et en ce que le mélangeur comporte une enceinte en contact thermique avec un deuxième circuit de circulation relié au système de climatisation pour faire circuler le fluide frigoporteur et avec un troisième circuit de circulation relié au dispositif de refroidissement pour faire circuler le fluide caloporteur chaud.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre un schéma de principe d'une frigopompe,
- la figure 2 est un exemple de réalisation d'une frigopompe à quatre effets selon l'invention,
- la figure 3 illustre en détail la chaudière-séparateur de la frigopompe de la figure 2, et
- la figure 4 est un exemple de réalisation d'une frigopompe à deux effets de l'art antérieur.

### Description détaillée d'un mode de réalisation préférentiel

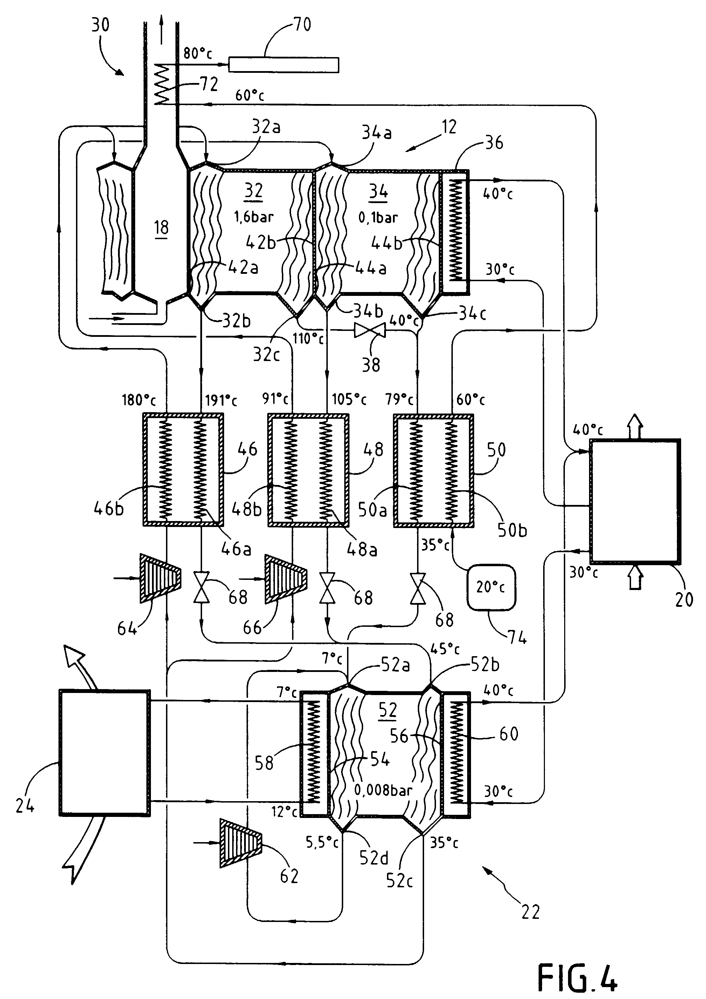

la figure 4 montre en détail une structure de frigopompe à deux étages de désorption-condensation dite à deux effets de l'art antérieur conforme au principe de fonctionnement énoncé en préambule.

La chaudière-séparateur 30 se présente comme une chaudière classique de production d'eau chaude pour un réseau de chauffage central de bâtiment avec une chambre de combustion 18 formée d'une enceinte cylindrique verticale et entourée de trois enceintes cylindriques concentriques. La plus extérieure 36 est parcourue par une eau de réfrigération (ayant un rôle de fluide caloporteur chaud) qui provient directement d'un aéro-réfrigérant 20 et y retourne après avoir acquis dans cette enceinte externe un niveau thermique supérieur (par exemple de 30°C à 40°C). Les deux enceintes intermédiaires faisant fonction chacune de désorbeur-condenseur, comprennent une première enceinte 32 la plus proche de la chambre de combustion et une deuxième enceinte 34, toutes deux de préférence de très faible épaisseur (quelques centimètres), qui servent à régénérer la solution diluée (le diluat ou fluide frigorigène) de même concentration introduite en parallèle dans une partie supérieure 32a, 34a de chacune de ces deux enceintes que l'on désignera dans la suite de la description par le terme entrée diluat. Cette régénération est réalisée par vaporisation du diluat qui ruisselle en film mince sur une paroi intérieure 42a, 44a de chaque enceinte chauffée par la flamme de combustion. On notera que cette technique de films ruisselants a l'avantage de conduire à de grands coefficients de transfert de chaleur, donc à de faibles pincements thermiques (de l'ordre de 5°C), ce qui assure un grand rendement énergétique à la frigopompe. Sous l'effet de la chaleur, le solvant (l'eau) s'en évapore et va se condenser sur une paroi extérieure 42b, 44b de l'enceinte, opposée à la paroi intérieure précitée. La solution concentrée (le concentrat de bromure de lithium) et le solvant chaud sont alors recueillis séparément au niveau de la partie inférieure 32b, 32c; 34b, 34c de ces enceintes (désignées dans la suite de la description par les termes sortie concentrat et sortie solvant), respectivement près de la paroi intérieure 42a, 44a (sortie concentrat) et près de la paroi extérieure 42b, 44b (sortie solvant), et ils sont dirigés vers des échangeurs statiques 46, 48; 50 dans lesquels ils réchauffent à leur tour la solution diluée et le solvant froid introduits à contre-courant dans ces échangeurs.

Le mélangeur 22 qui fait fonction d'évaporateur-absorbeur se présente avantageusement sous la forme d'une enceinte verticale 52 comportant à sa partie supérieure une première entrée 52a recevant le solvant pur qui va ruisseler en film mince le long d'une paroi interne 54 de cette enceinte et dont l'évaporation résultant de la circulation du fluide caloporteur froid traversant le système de climatisation 24 dans un premier élément 58 d'échange de cette enceinte va entraîner la reformation sur une paroi opposée 56 de la solution diluée à partir de la solution concentrée reçue au niveau d'une seconde entrée 52b. Ces première et seconde entrées seront désignées dans la suite de la description par les termes respectifs de entrée solvant et entrée concentrat. La solution diluée est prélevée à la partie inférieure de l'enceinte 52 au niveau d'une première sortie 52c désignée ultérieurement par le terme sortie diluat et le reste de solvant non évaporé et refroidi est prélevé à son tour à cette partie inférieure au niveau d'une seconde sortie 52d désignée par le terme sortie solvant. L'enceinte 52 est parcourue au niveau d'un second élément d'échange 60 de cette enceinte par le fluide caloporteur chaud qui provient directement de l'aéro-réfrigérant 20 et y retourne après avoir acquis un niveau thermique supérieur (de 30°C à 40°C dans l'exemple illustré). On notera qu'au niveau de cette enceinte, la sortie solvant est rebouclée sur l'entrée solvant au travers d'une pompe de mise en circulation 62.

Le premier échangeur 46 comporte d'une part un premier élément d'échange 46a dont l'une de ses deux extrémités est reliée à la sortie concentrat 32b de la première enceinte 32, son autre extrémité étant reliée à l'entrée concentrat 52b de l'enceinte 52 du mélangeur 22 et d'autre part un second élément d'échange 46b dont l'une de ses deux extrémités est reliée à la sortie diluat 52c de l'enceinte 52 du mélangeur 22, son autre extrémité étant reliée à l'entrée diluat 32a de la première enceinte 32.

Le deuxième échangeur 48 comporte d'une part un premier élément d'échange 48a dont l'une de ses deux extrémités est reliée à la sortie concentrat 34b de la deuxième enceinte 34, son autre extrémité étant également reliée à l'entrée concentrat 52b de l'enceinte 52 du mélangeur 22 et d'autre part un second élément d'échange 48b dont l'une de ses deux extrémités est également reliée à la sortie diluat 52c de l'enceinte 52 du mélangeur 22, son autre extrémité étant reliée à l'entrée diluat 34a de la deuxième enceinte 34.

Le troisième échangeur 50 comporte d'une part un premier élément d'échange 50a dont l'une de ses deux extrémités est reliée aux sorties solvant 32c, 34c des première et deuxième enceintes 32, 34 (une vanne 38, placée par exemple en sortie de la première enceinte, permet d'adapter la température d'échange en régulant le niveau de solvant en provenance de l'une ou l'autre enceinte), son autre extrémité étant reliée à l'entrée solvant 52a de l'enceinte 52 du mélangeur 22 et d'autre part un second élément d'échange 50b dont l'une de ses deux extrémités est reliée à un circuit d'eau chaude sanitaire 70 au travers d'un récupérateur de fumées 72 de la chambre de combustion 18, son autre extrémité étant reliée à une réserve 74, par exemple d'eau de ville à 20°C, pour alimenter ce circuit d'eau chaude.

Bien entendu, des pompes 64, 66 et des vannes 68 pour faciliter la circulation du fluide frigorigène sont prévues entre l'enceinte 52 et les différents échangeurs 46, 48, 50.

En supposant que la première enceinte de la chaudière-séparateur fonctionne sous une pression de 1.6 bar, la deuxième sous 0.1 bar, et que le mélangeur fonctionne lui même sous une pression de 0.008 bar (6.1 mmHg), et en adoptant un titre de bromure de lithium de xc = 0.62 dans le concentrat et de xd = 0.58 dans le diluat, on peut montrer que les températures de paroi d'une telle frigopompe de l'art antérieur atteignent les valeurs suivantes: 140°C- 155°C pour la paroi 42a entre la chambre de combustion et la première enceinte 32; 85°C- 95°C pour la paroi de liaison 42b-44a entre les première et deuxième enceintes; et 40°C- 45°C pour la paroi 44b entre la deuxième enceinte et l'enceinte externe 36. Les températures obtenues en différents points de la frigopompe sont indiquées sur la figure 4.

Un bilan thermique et massique de cette frigopompe permet de déterminer les puissances thermiques transmises entre les divers éléments. Ainsi, en choisissant une puissance initiale du combustible de 50 kW et en supposant un rendement de la chambre de combustion de 85%, on peut en déduire que le séparateur reçoit 42.5kW. Il en restitue 30kW au fluide caloporteur chaud qui les transfère à l'atmosphère par l'aéro-réfrigérant. D'autre part, le mélangeur pompe 64kW dans le fluide caloporteur froid (fluide frigoporteur) qui vient du système de climatisation et il refoule 76.5kW dans le fluide caloporteur chaud qui les transfère également à l'atmosphère par l'aéro-réfrigérant. On notera que les premier 46 et deuxième 48 échangeurs de chaleur placés à contre courant entre diluats et concentrats ont des puissances thermiques élevées de 66.5 et 23.5kW respectivement. Enfin, l'eau prélevée à 20°C reçoit 5kW du troisième échangeur 50 (qui reçoit le solvant chaud sortant du séparateur) et 2.5kW supplémentaire du récupérateur de fumées 70 qui reçoit 7.5kW de la chambre de combustion.

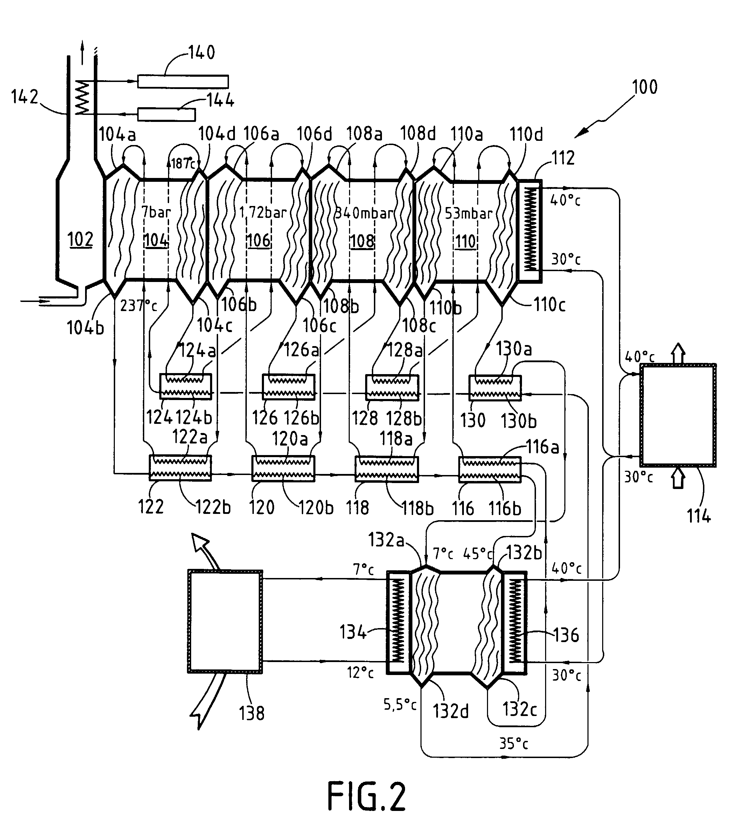

La figure 2 montre un exemple de réalisation d'une frigopompe selon l'invention. Cette frigopompe est à quatre effets mais il est évident qu'une frigopompe à trois effets mettant en oeuvre les principes de l'invention est aussi envisageable. Ces principes reposent non plus sur l'utilisation de deux cellules ou étages de désorption-condensation alimentées en parallèle, comme dans l'art antérieur, mais sur celui de plusieurs cellules de désorption-absorption reliées en série. En effet, il ne s'agit plus seulement de provoquer dans chaque cellule une condensation (sous l'effet de la chaleur) du solvant sur la paroi opposée à celle de son écoulement et de recueillir les constituants ainsi séparés pour les amener au mélangeur, mais de générer une absorption de la vapeur d'eau issue de ce diluat dans un concentrat ruisselant sur cette paroi opposée, puis de répéter cette opération avec la cellule suivante à partir des concentrats recueillis.

La chaudière-séparateur 100 peut toutefois également se présenter comme une chaudière classique de production d'eau chaude avec une chambre de combustion 102 formée d'une enceinte cylindrique verticale et entourée de plusieurs enceintes cylindriques concentriques dont la plus extérieure 112 est parcourue par le fluide caloporteur chaud (avantageusement formé simplement par une eau de réfrigération à 30°C) qui provient directement d'un dispositif de réfrigération tel un aéro-réfrigérant 114 et y retourne après avoir acquis un niveau thermique supérieur. Les quatre enceintes intermédiaires 104, 106, 108, 110 faisant fonction chacune de désorbeur-absorbeur servent à régénérer le fluide frigorigène qui est introduit initialement sous une forme diluée (le diluat) au niveau du désorbeur de l'enceinte 110 immédiatement adjacente de l'enceinte la plus extérieure (la quatrième enceinte dans cette frigopompe à quatre effets) par une entrée diluat 110a située à une partie supérieure de cette enceinte, puis traverse ensuite et successivement chacune de ces enceintes, où il va se réchauffer progressivement, pour resortir enfin sous une forme concentrée au niveau du désorbeur de la première enceinte 104 (la plus proche de la chambre de combustion) par une sortie concentrat 104b de sa partie inférieure. Parallèlement, ce même fluide frigorigène mais sous sa forme concentrée (le concentrat) va parcourir un chemin inverse depuis son introduction au niveau de l'absorbeur de la première enceinte 104 par une entrée concentrat 104d située à sa partie supérieure jusqu'à son expulsion par une sortie diluat 110c à la partie inférieure de l'absorbeur de la quatrième enceinte 110 en passant successivement au travers des enceintes intermédiaires où il va au contraire se refroidir. En outre, quatre échangeurs statiques 116, 118, 120, 122 sont placés entre chaque enceinte, plus précisément entre la sortie concentrat du désorbeur d'une enceinte et l'entrée diluat du désorbeur de celle immédiatement adjacente, pour réchauffer le diluat au fur et à mesure de sa progression au travers de ces enceintes et quatre autres échangeurs statiques 124, 126, 128, 130 sont également placés entre chaque enceinte, plus précisément entre la sortie diluat de l'absorbeur d'une enceinte et l'entrée concentrat de l'absorbeur de celle immédiatement adjacente, pour refroidir le concentrat au fur et à mesure de sa progression (effectuée à contre-courant) au travers de ces enceintes.

Pour sa part, le mélangeur comporte également une cellule de désorption-absorption et peut se présenter avantageusement sous la forme d'une enceinte verticale 132 comportant à sa partie supérieure une entrée diluat 132a et une entrée concentrat 132b. Le diluat est prélevé à la partie inférieure de cette enceinte au niveau d'une sortie diluat 132c et le concentrat est prélevé à son tour à cette partie inférieure au niveau d'une sortie concentrat 132d. Comme précédemment, l'enceinte 132 est parcourue, au niveau d'un premier élément d'échange 134, par le fluide caloporteur froid (dit aussi fluide frigoporteur) traversant le système de climatisation 138 et, au niveau d'un second élément d'échange 136, par le fluide caloporteur chaud traversant l'aéro-réfrigérant 114.

Le premier échangeur 116 comporte d'une part un premier élément d'échange 116a dont l'une de ses deux extrémités est reliée à la sortie diluat 132c de l'enceinte du mélangeur 132, son autre extrémité étant reliée à l'entrée diluat 110a du désorbeur de la quatrième enceinte 110 et d'autre part un second élément d'échange 116b dont l'une de ses deux extrémités est reliée à l'entrée concentrat 132b de l'enceinte du mélangeur 132, son autre extrémité étant reliée à la sortie du second élément d'échange 118b du deuxième échangeur 118.

Ce deuxième échangeur 118 comporte d'une part un premier élément d'échange 118a dont l'une de ses deux extrémités est reliée à la sortie concentrat 110b du désorbeur de la quatrième enceinte 110, son autre extrémité étant reliée à l'entrée diluat 108a du désorbeur de la troisième enceinte 108 et d'autre part un second élément d'échange 118b dont l'une de ses deux extrémités est reliée à l'entrée du second élément d'échange 116b du premier échangeur 116, son autre extrémité étant reliée à la sortie du second élément d'échange 120b du troisième échangeur 120.

Ce troisième échangeur 120 comporte d'une part un premier élément d'échange 120a dont l'une de ses deux extrémités est reliée à la sortie concentrat 108b du désorbeur de la troisième enceinte 108, son autre extrémité étant reliée à l'entrée diluat 106a du désorbeur de la deuxième enceinte 106 et d'autre part un second élément d'échange 120b dont l'une de ses deux extrémités est reliée à l'entrée du second élément d'échange 118b du deuxième échangeur 118, son autre extrémité étant reliée à la sortie du second élément d'échange 122b du quatrième échangeur 122.

Ce quatrième échangeur 122 comporte d'une part un premier élément d'échange 122a dont l'une de ses deux extrémités est reliée à la sortie concentrat 106b du désorbeur de la deuxième enceinte 106, son autre extrémité étant reliée à l'entrée diluat 104a du désorbeur de la première enceinte 104 et d'autre part un second élément d'échange 122b dont l'une de ses deux extrémités est reliée à l'entrée du second élément d'échange 120b du troisième échangeur 120, son autre extrémité étant reliée à la sortie concentrat 104b du désorbeur de la première enceinte 104.

Le cinquième échangeur 124 comporte d'une part un premier élément d'échange 124a dont l'une de ses deux extrémités est reliée à la sortie diluat 104c de l'absorbeur de la première enceinte 104, son autre extrémité étant reliée à l'entrée concentrat 106d de l'absorbeur de la deuxième enceinte 106 et d'autre part un second élément d'échange 124b dont l'une de ses deux extrémités est reliée à une entrée concentrat 104d de la première enceinte 104, son autre extrémité étant reliée à la sortie du second élément d'échange 126b du sixième échangeur 126.

Ce sixième échangeur 126 comporte d'une part un premier élément d'échange 126a dont l'une de ses deux extrémités est reliée à la sortie diluat 106c de l'absorbeur de la deuxième enceinte 106, son autre extrémité étant reliée à l'entrée concentrat 108d de l'absorbeur de la troisième enceinte 108 et d'autre part un second élément d'échange 126b dont l'une de ses deux extrémités est reliée à l'entrée du second élément d'échange 124b du cinquième échangeur 124, son autre extrémité étant reliée à la sortie du second élément d'échange 128b du septième échangeur 128.

Ce septième échangeur 128 comporte d'une part un premier élément d'échange 128a dont l'une de ses deux extrémités est reliée à la sortie diluat 108c de l'absorbeur de la troisième enceinte 108, son autre extrémité étant reliée à l'entrée concentrat 110d de l'absorbeur de la quatrième enceinte 110 et d'autre part un second élément d'échange 128b dont l'une de ses deux extrémités est reliée à l'entrée du second élément d'échange 126b du sixième échangeur 126, son autre extrémité étant reliée à la sortie du second élément d'échange 130b du huitième échangeur 130.

Ce huitième échangeur 130 comporte d'une part un premier élément d'échange 130a dont l'une de ses deux extrémités est reliée à la sortie diluat 110c de l'absorbeur de la quatrième enceinte 110, son autre extrémité étant reliée à l'entrée diluat 132a de l'enceinte du mélangeur 132 et d'autre part un second élément d'échange 130b dont l'une de ses deux extrémités est reliée à l'entrée du second élément d'échange 128b du septième échangeur 128, son autre extrémité étant reliée à la sortie concentrat 132d de l'enceinte du mélangeur 132. On aura noté que le système fonctionne en circuit fermé, le fluide frigorigène étant alternativement décomposé et recomposé et, qu'en conséquence, s'il est souhaité disposer d'un circuit d'eau chaude sanitaire 140, comme sur la frigopompe de l'art antérieur, celui-ci devra de préférence transiter par le circuit de récupération de fumée 140 de la chambre de combustion 102 à partir d'une source, par exemple d'eau de ville 144.

Bien entendu, des pompes et des vannes (non représentées) seront prévues pour faciliter la circulation du fluide frigorigène entre les différents éléments de la frigopompe.

Les températures et pressions enregistrées au niveau des enceintes de la chaudière-séparateur telles qu'illustrées sur la figure 2 montrent qu'il est ainsi possible avec la structure de l'invention d'obtenir une frigopompe à quatre effets ayant des températures pour le concentrat de l'ordre de 250°C tout en restant dans des pressions maximales admissibles (7 bars dans la première enceinte).

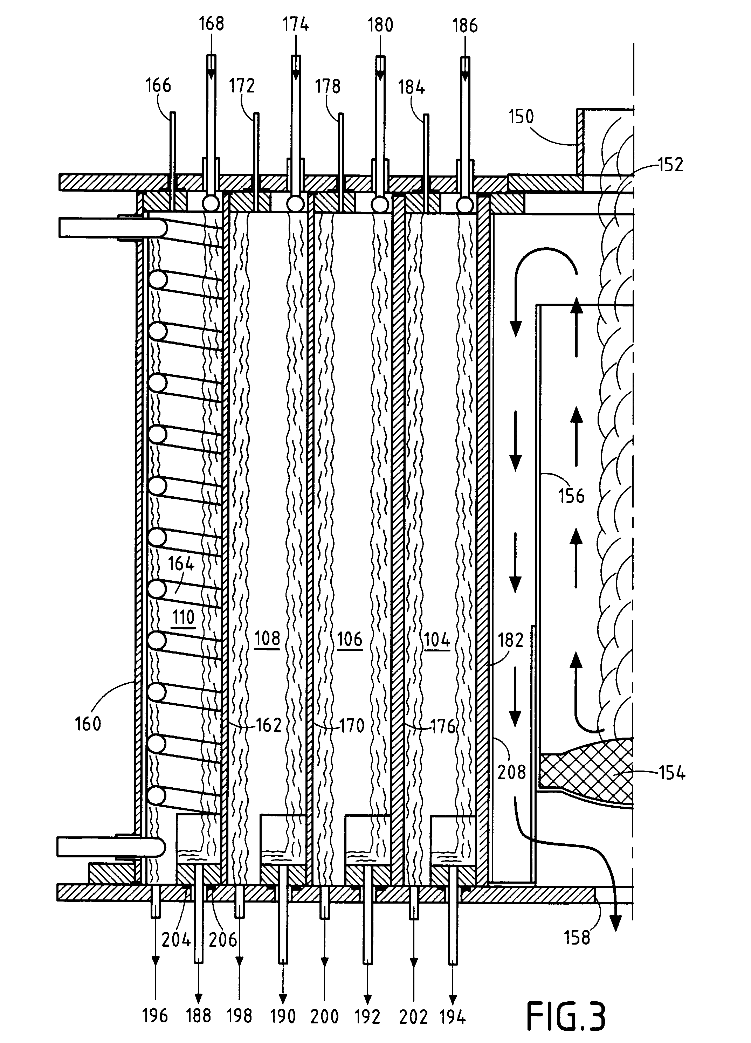

La structure de la chaudière-séparateur mise en oeuvre dans l'invention est montrée sur la figure 3. Elle présente une forme cylindrique dans l'axe longitudinal de laquelle est disposé un brûleur à gaz ou à fuel (non représenté). La référence 150 désigne un support de ce brûleur et la référence 152 un disque de protection thermique. Un disque de matériau réfractaire 154 fixé à une paroi de séparation tubulaire coaxiale 156 sépare la zone de combustion et notamment l'extrémité de la flamme d'un orifice d'évacuation des fumées 158. Des enceintes concentriques sont disposées régulièrement autour du foyer de combustion entre la paroi tubulaire et une paroi externe 160. Une première paroi 162 forme avec cette paroi externe la quatrième enceinte 104 dans laquelle est disposé un tube enroulé en spires non jointives (serpentin 164) à l'intérieur duquel s'écoule à contre-courant le fluide caloporteur chaud. Le diluat et le concentrat sont introduits dans cette enceinte par plusieurs conduits distributeurs 168, 166 disposés au niveau supérieur de la première paroi et de la paroi externe respectivement. De même, une deuxième paroi 170 forme avec la première paroi la troisième enceinte 106 à l'intérieur de laquelle sont également introduits respectivement par des conduits de distribution 174, 172 le diluat et le concentrat. Dans une frigopompe à trois effets, il est prévu une troisième paroi 176 formant la seconde enceinte 108 avec la deuxième paroi et munie de conduits de distribution 180 et 178 pour le diluat et le concentrat. Enfin, dans l'exemple illustré correspondant à une frigopompe à quatre effets, une quatrième paroi 182, la plus proche de la zone de combustion, est aussi prévue et forme avec la troisième paroi la première enceinte 110 pouvant recevoir le diluat et le concentrat par des conduits respectifs 186, 184. A la partie inférieure de ces parois des conduits de collecte du concentrat 188, 190, 192, 194 et du diluat 196, 198, 200, 202 permettent de récupérer ces éléments. Bien entendu, des joints d'étanchéité, par exemple 204, 206, sont prévus pour éviter tout mélange entre diluat et concentrat d'une même enceinte ou de deux enceintes adjacentes.

Les première et deuxième enceintes, les plus proches de la chambre de combustion, comportent de préférence des parois en graphite imprégné de résine. Il est ainsi possible d'obtenir des protections thermiques jusqu'à 400°C. Au besoin, la paroi en graphite de la première enceinte 182, en contact direct avec la flamme de combustion, peut être recouverte d'une mince feuille d'un métal réfractaire 208.

## Revendications

1. Frigopompe de refroidissement d'un fluide frigoporteur alimentant un système de climatisation d'un bâtiment et comportant d'une part une chaudière-séparateur (100) destinée à séparer par chauffage et évaporation les deux constituants, dont l'un est volatile, d'un fluide frigorigène et d'autre part un mélangeur (132) destiné à reformer par évaporation et absorption ce fluide frigorigène, caractérisée en ce que la chaudière-séparateur comporte une chambre de combustion (102) et plusieurs enceintes (104, 106, 108, 110) de désorption-absorption s'étendant concentriquement depuis cette chambre de combustion, le conduit de sortie (110b, 108b, 106b) de la partie de désorption ou désorbeur d'une enceinte étant relié au conduit d'entrée (108a, 106a, 104a) du désorbeur de l'enceinte immédiatement précédente au travers d'un premier échangeur (118, 120, 122), le conduit de sortie (104b) du désorbeur de la première enceinte et le conduit d'entrée (110a) du désorbeur de la dernière enceinte étant reliés au mélangeur (132), et le conduit de sortie (104c, 106c, 108c) de la partie d'absorption ou absorbeur d'une enceinte étant lui-même relié au conduit d'entrée (106d, 108d, 110d) de l'absorbeur de l'enceinte immédiatement suivante au travers d'un second échangeur (124, 126, 128), le conduit d'entrée (104d) de l'absorbeur de la première enceinte et le conduit de sortie (110c) de l'absorbeur de la dernière enceinte étant reliés au mélangeur (132).

2. Frigopompe selon la revendication 1, caractérisée en ce que le conduit d'entrée (110a; 168) du désorbeur de la dernière enceinte (110) est relié au mélangeur (132) au travers d'un premier échangeur (116).

3. Frigopompe selon la revendication 1 et la revendication 2, caractérisée en ce que le conduit de sortie (104b; 194) du désorbeur de la première enceinte (104) est relié au mélangeur (132) au travers de l'ensemble des premiers échangeurs (116-122).

4. Frigopompe selon la revendication 1, caractérisée en ce que le conduit de sortie (110c; 196) de l'absorbeur de la dernière enceinte (110) est relié au mélangeur (132) au travers d'un second échangeur (130).

5. Frigopompe selon la revendication 1 et la revendication 4, caractérisée en ce que le conduit d'entrée (104d; 184) de l'absorbeur de la première enceinte (104) est relié au mélangeur (132) au travers de l'ensemble des seconds échangeurs (124-130).

6. Frigopompe selon la revendication 1, caractérisée en ce que le fluide frigorigène est un mélange d'eau et de bromure de lithium.

7. Frigopompe selon la revendication 6, caractérisée en ce que le fluide frigoporteur est un liquide à bas seuil de congélation tel que de l'eau glycolée.

8. Frigopompe selon l'une quelconque des revendications 1 à 7, caractérisée en ce que la chaudière-séparateur comporte trois enceintes de désorption-absorption.

9. Frigopompe selon l'une quelconque des revendications 1 à 7, caractérisée en ce que la chaudière-séparateur comporte quatre enceintes de désorption-absorption.

10. Frigopompe selon la revendication 9, caractérisée en ce que les première et seconde enceintes (104, 106) les plus proches de la chambre de combustion (102) comportent des parois en graphite imprégné de résine.

11. Frigopompe selon la revendication 10, caractérisée en ce que la paroi en graphite de la première enceinte (104) en contact direct avec la flamme de combustion est recouverte d'une mince feuille d'un métal réfractaire (208).

12. Frigopompe selon la revendication 1, caractérisée en ce que l'enceinte la plus externe (112) de la chaudière-séparateur (100) comporte un premier circuit de circulation relié à un dispositif (114) de refroidissement d'un fluide caloporteur chaud, tel un aéro-réfrigérant, et en ce que le mélangeur (132) comporte une enceinte en contact thermique avec un deuxième circuit de circulation (134) relié au système de climatisation (138) pour faire circuler le fluide frigoporteur et avec un troisième circuit de circulation (136) relié au dispositif de refroidissement pour faire circuler le fluide caloporteur chaud.
